# EUROPÄISCHE PATENTANMELDUNG

(11) **EP 4 846 878 A1**
(43) Veröffentlichungstag der Anmeldung: **02.12.2026**
(21) Anmeldenummer: 25212238.7
(22) Anmeldetag: 30.10.2025
(51) Int. Cl.: A41D 19/00, G06F 3/01, G06Q 20/32, H04W 4/80

(54) **HANDSCHUH MIT NFC-ZAHLCHIP**

(30) Priorität: 30.05.2025 CH 5942025
(71) Anmelder: Schuler, Ivan, 5634 Merenschwand (CH)
(72) Erfinder: Schuler, Ivan, 5634 Merenschwand (CH)
(74) Vertreter: Prins Intellectual Property AG

(57) **Zusammenfassung**

Es wird ein Handschuh (13) mit einem Handrücken (11), einer Handinnenseite (12), einem Daumen (10) und Fingern (9) beschrieben, umfassend, mindestens einen Magneten (2) und mindestens einen Reed-Schalter (1). Der Handschuh (13) weist einen NFC-Zahlchip (6) zum Hinterlegen mindestens eines Zahlungsmittels (15) auf, wobei der NFC-Zahlchip (6) durch den mindestens einen Reed-Schalter (1) und den mindestens einen Magneten (2) aktivierbar ist. Zudem weist der Handschuh (13) eine App-Verbindungszone (4) auf zum Verbinden des NFC-Zahlchips (6) mit einer App auf einem Gerät zum Programmieren oder Einrichten des mindestens einen Zahlungsmittels (15) auf dem NFC-Zahlchip (6) zur kontaktlosen Zahlungsabwicklung an einem NFC-Terminal.

## Beschreibung

### Technisches Gebiet

Die Erfindung betrifft einen Handschuh mit integriertem NFC-Zahlchip zum kontaktlosen Bezahlen an einer Zahlstation.

### Stand der Technik

Handschuhe mit einem NFC-Chip zum Benutzen bestimmter Funktionen, beispielsweise zum Benutzen einer Leistung in Skigebieten oder zum kontaktlosen Öffnen eines Schlosses, ist bekannt. In CN 203838740U ist ein Handschuh mit einem NFC-Chipsatz offenbart, der das Mitführen und Verwalten einer Vielzahl von NFC-Chips erleichtert, indem jedem NFC-Chip ein Magnetschalter zugeordnet ist, welcher über einen Magneten eingeschaltet wird und den entsprechende NFC-Chip in den Betriebszustand versetzt. Jeder NFC-Chip ist einer Funktion zugeordnet. Nachteilig an diesem Handschuh ist es, dass die Chips nicht mehrfach programmiert und einem bestimmten Zahlungsmittel zugeordnet werden können zum kontaktlosen Bezahlen an einer Zahlstation.

### Aufgabe der Erfindung

Der vorliegenden Erfindung liegt nun die Aufgabe zugrunde, einen Handschuh mit integriertem NFC-Zahlchip zum kontaktlosen Bezahlen an einer Zahlstation zur Verfügung zu stellen, auf welchem mehrere Zahlungsmittel hinterlegt werden können und mit welchem ein gewünschtes Zahlungsmittel einfach und sicher ausgewählt und beim Zahlvorgang ohne Benutzung eines weiteren mobilen Geräts mit dem gewünschten Zahlungsmittel kontaktlos bezahlt werden kann.

### Beschreibung der Erfindung

Diese Aufgabe wird durch einen Handschuh mit einem Handrücken, einer Handinnenseite, einem Daumen und Fingern, umfassend, mindestens einen Magneten und mindestens einen Reed-Schalter gelöst, wobei der Handschuh einen NFC-Zahlchip zum Hinterlegen mindestens eines Zahlungsmittels aufweist, wobei der NFC-Zahlchip durch den mindestens einen Reed-Schalter und den mindestens einen Magneten aktivierbar ist, und wobei am Handschuh eine App-Verbindungszone angeordnet ist zum Verbinden des NFC-Zahlchips mit einer App auf einem Gerät zum Programmieren oder Einrichten des mindestens einen Zahlungsmittels auf dem NFC-Zahlchip zur kontaktlosen Zahlungsabwicklung an einem NFC-Terminal. Vorzugsweise sind der NFC-Zahlchip und der mindestens eine Reed-Schalter über Verbindungskabel mit der App-Verbindungszone verbunden.

Der Handschuh ist vorzugsweise ein Motorradhandschuh, welcher vorzugsweise aus einem textilen oder flexiblen Material, vorzugsweise aus einem robusten und abriebfesten Material, hergestellt ist, in welches die verschiedenen Komponenten der Erfindung wie der NFC-Zahlchip, der Reed-Schalter, der Magnet, die Verbindungskabel, die App-Verbindungszone und gegebenenfalls der Mikrocontroller und die Energiequelle einfach eingebettet werden können. Beispielsweise ist der Handschuh, vorzugsweise der Motorradhandschuh, aus einem Textilgewebe wie Polyester, Cordura, Mesh, GORE-TEX oder aus einem Leder, wie z. B. Rinds-, Ziegen- oder Känguruleder, hergestellt.

Beim NFC-Zahlchip handelt es sich vorzugsweise um einen programmierbaren NFC-Zahlchip, auf welchem mehrere Zahlungsmittel wie beispielsweise Zahlungsprofile oder Zahlkonten hinterlegt beziehungsweise gespeichert oder verwaltet werden können, und mit denen kontaktlos bezahlt werden kann. Beispielsweise kann ein Zahlungsmittel für ein Token oder eine digitale Kredit-, Debit- oder Prepaidkartennummer stehen, welche Zahlungsdaten aufweist und mit einem gewünschten Bankkonto verknüpft ist.

Vorzugsweise weit der NFC-Zahlchip zum kontaktlosen Bezahlen ein Secure Element (SE) auf, um die Zahlungsdaten des Zahlungsmittels, wie beispielsweise ein Token oder eine Kartennummer sicher zu speichern und Transaktionen gegen Manipulation und Auslesen durch Dritte zu schützen. Das Secure Element ist vorzugsweise eine speziell abgesicherte Hardwarekomponente, die von anderen Apps abgekapselt ist und höchste Sicherheit gewährleistet, insbesondere für das kontaktlose Bezahlen. Bei einer Zahlung verarbeitet das Secure Element die Transaktionsdaten und gibt sie verschlüsselt nur an das NFC-Terminal weiter, ohne dass das Betriebssystem auf die vertraulichen Informationen zugreifen kann. Somit dient das Secure Element als zentrale Sicherheitsbasis für alle kritischen Zahlungsfunktionen im NFC-Zahlchip.

Der NFC-Zahlchip ist durch den Magneten und einen Reed-Schalter aktivierbar, indem der Magnet an ein im Handschuh eingebauten Reed-Schalter angenähert wird. Durch das Annähernd des Magneten an den Reed-Schalter wird ein Stromkreis geschlossen und das im NFC-Zahlchip gespeicherte Zahlungsmittel wird freigeschalten und der Zahlungsvorgang an einem NFC-Terminal kann vorgenommen werden.

Der NFC-Zahlchip ist vorzugsweise auf dem Handrücken des Handschuhs, noch mehr bevorzugt auf einem Fingerhandrücken, dem sogenannten Fingerrücken, vorzugsweise auf der Fingernagelrückseite, beispielsweise auf dem Zeigefingerrücken angeordnet zum einfachen Annähern an einen NFC-Terminal und kontaktlosen Bezahlen beispielsweise an einer Mautstation. Dabei muss weder der Handschuh ausgezogen noch ein separates Zahlungsmittel wie eine Kreditkarte oder ein Handy hervorgeholt und verwendet werden.

Unter einem Reed-Schalter wird ein elektromechanischer Schalter verstanden, welcher aus zwei ferromagnetischen Metallzungen besteht, die beispielsweise in einem kleinen Glasröhrchen hermetisch eingeschlossen sind. Im Ruhezustand sind die Kontaktzungen meist getrennt, also offen. Wenn ein ausreichend starkes Magnetfeld in der Nähe wirkt, ziehen sich die Metallzungen durch magnetische Anziehung an und schliessen dadurch den elektrischen Kontakt, wodurch der Schalter schaltet und beispielsweise Daten übermittelt, wie beispielsweise Zahlungsdaten freischaltet zum kontaktlosen Bezahlen gemäss vorliegender Erfindung.

Der mindestens eine Magnet zum Aktivieren des Reed-Schalters ist vorzugsweise ein Permanentmagnet, der ein ausreichend starkes Magnetfeld erzeugt, um die Federkraft der Kontaktzungen im Reed-Schalter zu überwinden und die Kontakte zu schliessen. Die Aktivierungsentfernung beträgt abhängig von Reed-Schalter und Magnet wenige Millimeter bis einige Zentimeter. Der Magnet ist beispielsweise ein Permanentmagnet aus Neodym-Eisen-Bor (NdFeB), welcher kompakt und sehr stark ist. Der mindestens eine Magnet ist vorzugsweise auf dem Daumen oder auf der Innenseite der Finger angeordnet oder der Magnet kann beispielsweise auch ein am Handschuh befestigtes Magnetschlüsselband sein, welches einfach dem Reed-Schalter angenähert werden kann.

Die App-Verbindungszone ist vorzugsweise auf dem Handrücken angeordnet. Unter einer App-Verbindungszone wird eine definierte Stelle auf dem Handschuh verstanden, welche mit dem eingebetteten NFC-Zahlchip und dem Reed-Schalter verbunden ist und als Schnittstelle zur Konfiguration und Steuerung über eine begleitende App vorzugsweise auf einem mobilen Gerät, beispielsweise einem Smartphone oder einem Tablet, dient. Vorzugsweise weist die App-Verbindungszone einen NFC-Tag oder einen QR-Code auf, welcher mit einem mobilen Gerät, wie einem Smartphone oder Tablet gescannt werden kann um eine Verbindung zu einer App herzustellen. Die App-Verbindungszone ist also ein beispielsweise über NFC realisiertes Bedien- und Kommunikationsfenster am Handschuh, das die Interaktion zwischen Nutzermobilgerät, NFC-Zahlchip und Reed-Schalter steuerbar macht und damit die dynamische Funktionalität wie Kontoauswahl oder Schalterzustand ermöglicht und den Handschuh mit einem Benutzerkonto verknüpft, welches das Zahlungsmittel auf dem NFC-Zahlchip festlegt. Über die App-Verbindungszone kann der Nutzer Konten zu verwalten, den Reed-Schalter kalibrieren und den Handschuh individuell konfigurieren ohne physischen Eingriff im Inneren des Handschuhs. Zudem kann nur über die App-Verbindungszone und über das App auf den NFC-Zahlchip und das Secure Element zugegriffen werden und der NFC-Zahlchip beziehungsweise die Reed-Schalter programmiert. Der Zugriff auf das Secure Element ist somit maximal gesichert und auf die Zahlungsmittel kann nur zugreifen, wer über die App Zugriff auf die entsprechenden Benutzerkonten hat.

Beim Aktivieren des NFC-Zahlchips durch das Annähern des Magneten an einen Reed-Schalter wird das zuvor über die App festgelegte Zahlungsmittel freigeschalten und der zu zahlende Betrag dem ausgewählten Benutzerkonto verbucht. Wenn das Zahlungsmittel beziehungsweise das Benutzerkonto gewechselt werden möchte, wird der NFC-Zahlchip über die App-Verbindungszone mit der App auf einem mobilen Gerät neu verbunden und das gewünschte neue Benutzerkonto ausgewählt. Die App-Verbindungszone ist besonders vorteilhaft zum einfachen Verknüpfen mit einem Benutzerkonto, zum Überblicken der ausgeführten Transaktionen auf einer App und zum Austauschen verschiedener Zahlungsmittel. Zudem kann über die App-Verbindungszone beziehungsweise über die damit verknüpfte App der NFC-Zahlchip und die Zahlfunktion mit dem Zahlungsmittel auf dem Handschuh gesperrt werden.

In einer ersten Ausführungsform weist der Handschuh einen einzigen Reed-Schalter und mehrere Magnete auf, wobei der Reed-Schalter auf dem Daumen und die Magnete auf einem Finger auf der Handinnenseite, auch Fingerinnenseite genannt, vorzugsweise auf der Fingerspitze innen, angeordnet ist.

Zum Auslösen der kontaktlosen Zahlungsabwicklung beim kontaktlosen Bezahlen wird der NFC-Zahlchip durch einen Magnet und einen Reed-Schalter aktiviert, indem der Magnet an einen im Handschuh eingebauten Reed-Schalter angenähert wird. Durch das Annähernd des Magneten an den Reed-Schalter wird ein Stromkreis geschlossen und das im NFC-Zahlchip gespeicherte Zahlungsmittel wird, vorzugsweise für eine zeitlich begrenzte Dauer, beispielsweise für 30 Sekunden, freigeschalten für die kontaktlose NFC-Zahlung an einem NFC-Terminal. Falls der NFC-Zahlchip ein Secure Element aufweist, wird das Secure Element freigegeben und die Daten können an ein NFC-Terminal gesendet werden. Wird der NFC-Zahlchip im Handschuh zur Zahlungsabwicklung an das entsprechende NFC-Terminal gehalten, überträgt der NFC-Zahlchip die verschlüsselten Kontodaten wie bei üblichem kontaktlosem Bezahlen mit einer Zahlkarte. Die Energieversorgung zur Übermittlung der Daten erfolgt passiv durch das NFC-Feld des NFC-Terminals.

In einer bevorzugte Ausführungsform weist der Handschuh mindestens zwei, vorzugsweise drei oder vier Reed-Schalter auf und einen Mikrocontroller auf, wobei der Mikrocontroller mit den mindestens zwei Reed-Schalter und dem NFC-Zahlchip verbunden ist zum gezielten Zuordnen eines Reed-Schalters mit einem Zahlungsmittel auf dem NFC-Zahlchip über die Annäherung des einen Reed-Schalters, welcher dem gewünschten Zahlungsmittel zugeordnet ist, an den Magneten. Vorzugsweise sind die mindestens zwei Reed-Schalter auf der Handinnenseite der Finger, auch Fingerinnenseite genannt, vorzugsweise auf der Fingerspitze innen angeordnet sind. In dieser Ausführungsform ist der mindestens eine Magnet vorzugsweise auf dem Daumen angeordnet zum einfachen Annähern an die Reed-Schalter auf der Fingerinnenseite. Vorzugsweise ist der Mikrocontroller auf der Handrückseite angebracht und vorzugsweise mit einer Energiequelle, vorzugsweise einer Batterie, verbunden.

Unter Mikrocontroller wird ein Computer auf einem einzigen integrierten Schaltkreis verstanden, der mit einem Prozessor, Speicher und Ein-/Ausgabe-Peripherien ausgestattet ist. Er dient zur Steuerung und Verarbeitung von Daten und steuert im Handschuh die Kommunikation zwischen dem Reed-Schalter und dem NFC-Zahlchip. Der Mikrocontroller kann den Status des Reed-Schalters auswerten, beispielsweise ob ein Magnet den Schalter aktiviert hat, und kann daraufhin steuern, welches der mehreren gespeicherten Zahlkonten im NFC-Zahlchip für die kontaktlose Zahlung freigeschaltet wird. Der Mikrocontroller kann zudem die Steuerlogik, Zeitschaltfunktionen wie beispielsweise die zeitlich begrenzte Aktivierung des Kontos, und die Kommunikation mit der App-Verbindungszone übernehmen, um Einstellungen und Status zu übermitteln.

Vorzugsweise werden die mehreren Reed-Schalter vor der Verwendung des Handschuhs zum kontaktlosen Bezahlen über die App-Verbindungszone und der damit verbundenen App je einem gewünschten Benutzerkonto und somit einem gewünschten Zahlungsmittel zugeordnet und entsprechend über den Mikrocontroller programmiert. Bei der kontaktlosen Zahlungsabwicklung wird der Reed-Schalter mit dem gewünschten Zahlungsmittel dem Magneten angenähert, wodurch der Mikrocontroller den Status des entsprechenden Reed-Schalters erkennt und das Zahlungsmittel beziehungsweise die entsprechenden Daten aus dem Secure Element auf dem NFC-Zahlchip freischaltet. Wird der Handschuh zur Zahlungsabwicklung an das entsprechende NFC-Terminal gehalten, überträgt der NFC-Zahlchip die verschlüsselten Kontodaten und die Bezahlung erfolgt über das zuvor mit dem Reed-Schalter und Magneten aktivierten Zahlungsmittel.

Die Ausführung mit mindestens zwei Reed-Schalter und einem Mikrocontroller ermöglicht es, dass mehrere Zahlungsmittel auf einem NFC-Zahlchip hinterlegt und je nach Aktivierung des entsprechenden Reed-Schalters als Zahlungsmittel bei der kontaktlosen Zahlungsabwicklung verwendet werden können.

In einer weiteren Ausführungsform weist der NFC-Zahlchip neben den Zahlungsmitteln ein weiteres Token-basiertes System, beispielsweise einen Schlüssel zum kontaktlosen Öffnen eines Fahrzeugs auf. Über die App-Vergindungszone wird in der App der gewünschte Reed-Schalter so programmiert, dass er auf dem NFC-Chip beim Annähern des Magneten an den entsprechenden Reed-Schalter die Daten beziehungsweise Token mit beispielsweise einem Schlüsselcode freischaltet zum Öffnen einer Tür. Dadurch kann der Handschuh beispielsweise gleichzeitig als Zahlungsmittel und als Fahrzeugschlüssel eingesetzt werden.

Die vorliegende Erfindung betrifft zudem die Verwendung eines erfindungsgemässen Handschuhs, vorzugsweise eines Motorradhandschuhs, zum Bezahlen an einem NFC-Terminal mit dem durch den Magneten und den Reed-Schalter aktivierten Zahlungsmittel auf dem NFC-Zahlchip und durch Annähern des NFC-Zahlchips an den NFC-Terminal.

Zudem betrifft die vorliegende Erfindung ein Verfahren zur Programmierung eines NFC-Zahlchips auf einem erfindungsgemässen Handschuh und zur kontaktlosen Zahlungsabwicklung an einem NFC-Terminal, umfassend die Schritte: (a) Verbinden der App-Verbindungszone mit einer App auf einem mobilen Gerät; (b) Zuordnung eines Zahlungsmittels auf dem NFC-Zahlchip zu einem Benutzerkonto auf der App; (c) Gegebenenfalls Zuordnung des Reed-Schalters zu einem Zahlungsmittel; (d) Aktivierung des NFC-Zahlchips auf dem Handschuh durch Annäherung des mindestens einen Magneten an einen Reed-Schalter; (e) Freigabe des im NFC-Zahlchip (6) gespeicherten Zahlungsmittels durch Schliessen des Stromkreises im Reed-Schalter; (f) Halten des NFC-Zahlchips an einen NFC-Terminal zum kontaktlosen Bezahlen über das freigeschaltete Zahlungsmittel.

Die vorliegende Erfindung hat den Vorteil, dass auf einem einzigen NFC-Zahlchip mehrere Zahlungsmittel gespeichert und somit mit dem Handschuh je nach Betätigung der entsprechenden Reed-Schalter das gewünschte Zahlungsmittel ausgewählt werden kann zur kontaktlosen Zahlungsabwicklung an einem NFC-Terminal. Dies ist besonders vorteilhaft bei einem Motorradhandschuh, wenn beispielsweise bei einer Mautstation eine Gebühr bezahlt werden muss und der vorher programmierte NFC-Zahlchip auf einem Finger des Motorradhandschuhs einfach an das NFC-Terminal gehalten werden kann und die Bezahlung freigeschalten wird durch das Annähern des Magneten an einen Reed-Schalter. Dadurch muss weder der Motorradhandschuh ausgezogen noch ein zusätzliches Gerät wie ein Smartphone oder eine Kreditkarte hervorgeholt werden, was die Zahlungsabwicklung beschleunigt, und wodurch das umständliche An- und Ausziehen des Handschuhs wegfällt.

Zur Zahlungsabwicklung ist kein aktives Menü oder Display nötig, sondern die Programmierung des NFC-Zahlchips oder der Reed-Schalter erfolgt vorgängig über die Verbindung der App-Verbindungszone mit einer App auf einem mobilen Gerät. Durch die lokale Speicherung der Daten auf dem Secure Element auf dem NFC-Zahlchip liegt eine maximale Sicherheit vor. Die Zahlungsmittel können nur über autorisierte Verbindung über die App-Verbindungszone mit einer App geändert werden. Zudem ist es nicht möglich, den NFC-Zahlchip versehentlich und ohne bewusste Aktivierung durch den Träger zu nutzen.

Weitere Vorteile der Erfindung folgen aus der nachfolgenden Beschreibung, in der die Erfindung anhand von in den schematischen Zeichnungen dargestellten Ausführungsbeispielen näher erläutert wird.

### Kurze Beschreibung der Figuren

Es zeigen:
Fig. 1 eine schematische Ansicht auf die Innenseite einer ersten Version eines Handschuhs,
Fig. 2 eine schematische Ansicht auf den Handrücken einer ersten Version eines Handschuhs,
Fig. 3 eine schematische Ansicht auf die Innenseite einer zweiten Version eines Handschuhs, und
Fig. 4 eine schematische Ansicht auf den Handrücken einer zweiten Version eines Handschuhs.

In den Figuren sind für dieselben Elemente jeweils dieselben Bezugszeichen verwendet und es gelten Erklärungen zu einem bestimmten Bezugszeichen für alle Figuren, wenn nicht ausdrücklich etwas anders erwähnt ist.

### Ausführungsbeispiele der Erfindung

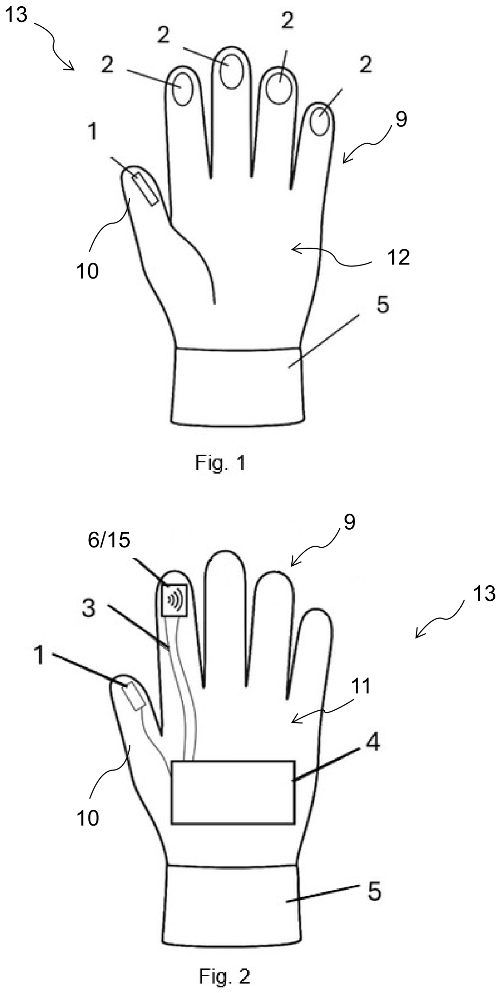

In Figur 1 ist die Handinnenseite 12 eines Handschuhs 13 mit einem Daumen 10 und Fingern 9 dargestellt. Auf der Handinnenseite 12 an den Fingerkuppen sind Magnete 2 angeordnet, und der Daumen 10 weist einen Reed-Schalter 1 auf, welcher beim Annähern eines Magneten 2 von einem Finger 9 aktiviert werden kann (siehe Fig. 2). Der Handschuh 13 ist aus einem textilen oder flexiblen Material 5 zur Aufnahme des NFC-Zahlchips 6, des Reed-Schalters 1, der Magnete 2 und der App-Verbindungszone 4 (siehe Fig. 2) hergestellt.

Figur 2 zeigt einen Handrücken 11 eines Handschuhs 13 aus einem textilen oder flexiblen Material 5, mit einem NFC-Zahlchip 6 und einer App-Verbindungszone 4. Der NFC-Zahlschip 6 und der auf dem Daumen 10 angeordnete Reed-Schalter 1 sind über Verbindungskabel 3 mit der App-Verbindungszone 4 verbunden. Auf dem NFC-Zahlchip 6 ist ein Zahlungsmittel 15 hinterlegt, welches über die App-Verbindungszone 4 mit einem Konto, welches auf einer App auf einem mobilen Gerät, beispielsweise auf einem Smartphone oder einem Tablet hinterlegt ist, verknüpft wird. In dieser Ausführungsform ist jeweils nur ein Konto auf dem NFC-Zahlchip 6 hinterlegt. Durch das Annähern des Reed-Schalters 1 am Daumen 10 an einen Magneten 2, welcher an der Fingerinnenseite der vier Finger 9 angeordnet ist (in Fig. 1 dargestellt), wird der Stromkreis auf dem Reed-Schalter 1 geöffnet und das Zahlungsmittel 15 auf dem NFC-Zahlchip 6 zur Zahlung freigegeben. Die App-Verbindungszone 4 ist auf dem Handrücken 11 angeordnet und dient zum Verbinden des NFC-Zahlchips 6 mit einer App auf einem Gerät zum Programmieren oder Einrichten des mindestens einen Zahlungsmittels 15 auf dem NFC-Zahlchip 6 zur kontaktlosen Zahlungsabwicklung an einem NFC-Terminal.

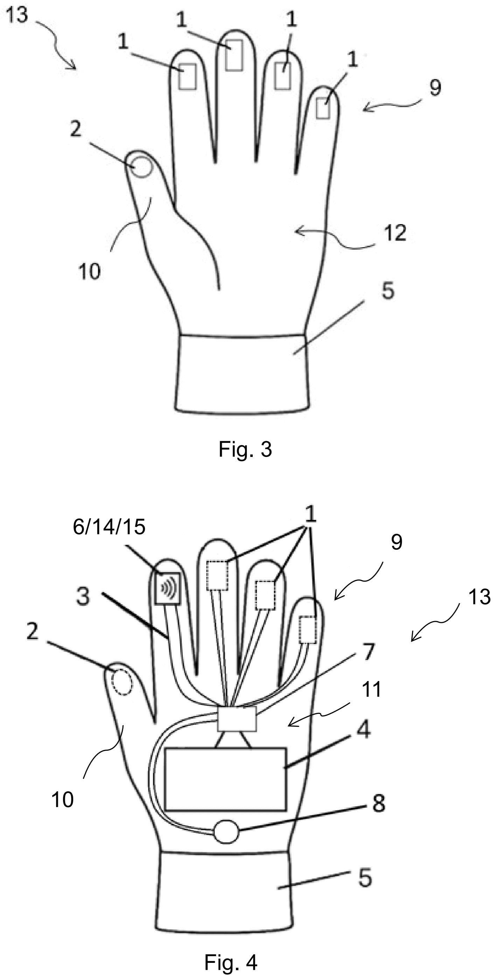

In Figur 3 ist die Handinnenseite 12 eines Handschuhs 13 mit einem Daumen 10 und Fingern 9 dargestellt. Auf der Handinnenseite 12 an den Fingerkuppen, beziehungsweise Fingerspitzen innen sind vier Reed-Schalter 1 angeordnet, und der Daumen 10 weist einen Magneten 2 auf, wobei die Reed-Schalter 1 beim Annähern des Magneten 2 aktiviert werden können (siehe Fig. 4). Der Handschuh 13 ist aus einem textilen oder flexiblen Material 5 hergestellt.

Figur 4 zeigt einen Handrücken 11 eines Handschuhs 13 aus einem textilen oder flexiblen Material 5, mit einem NFC-Zahlchip 6, einer App-Verbindungszone 4, einem Mikrocontroller 7 und einer Energiequelle 8. Der Hanschuh 13 weist vier Reed-Schalter 1 auf, welche auf den Finerspitzen inne auf der Handinnenseite 12 angeordnet sind (siehe Fig. 3) und hier in gestrichelter Linie dargestellt sind, um die Verbindung der Reed-Schalter 1 über ein Verbindungskabel 3 mit einem Mikrocontroller 7 zu zeigen. Der NFC-Zahlschip 6, die vier Reed-Schalter 1, der Mikrocontroller 7 und die Energiequelle 8 sind über Verbindungskabel 3 mit der App-Verbindungszone 4 verbunden. Auf dem NFC-Zahlchip 6 sind ein Secure Element 14 und mehrere Zahlungsmittel 15 hinterlegt, welche über die App-Verbindungszone 4 mit einem gewünschten Konto, welches auf einer App auf einem mobilen Gerät, beispielsweise auf einem Smartphone oder einem Tablet hinterlegt ist, verknüpft werden.

Bei der kontaktlosen Zahlungsabwicklung wird der Reed-Schalter 1 mit dem gewünschten Zahlungsmittel 15 dem Magneten 2 angenähert, wodurch der Mikrocontroller 7 den Status des entsprechenden Reed-Schalters 1 erkennt und das Zahlungsmittel 15 beziehungsweise die entsprechenden Daten aus dem Secure Element 14 auf dem NFC-Zahlchip freischaltet. Wird der Handschuh zur Zahlungsabwicklung an das entsprechende NFC-Terminal gehalten, überträgt der NFC-Zahlchip die verschlüsselten Kontodaten und die Bezahlung erfolgt über das zuvor mit dem Reed-Schalter und Magneten aktivierten Zahlungsmittel.

### Bezugszeichenliste

- 1: Reed-Schalter
- 2: Magnet
- 3: Verbindungskabel
- 4: App-Verbindungszone
- 5: Textile oder flexible Struktur
- 6: NFC-Zahlchip
- 7: Mikrocontroller
- 8: Batterie
- 9: Finger
- 10: Daumen
- 11: Handrücken
- 12: Handinnenseite
- 13: Handschuh
- 14: SE-Element
- 15: Zahlungsmittel

## Patentansprüche

1. Handschuh (13) mit einem Handrücken (11), einer Handinnenseite (12), einem Daumen (10) und Fingern (9), umfassend, mindestens einen Magneten (2) und mindestens einen Reed-Schalter (1), **dadurch gekennzeichnet, dass** der Handschuh (13) einen NFC-Zahlchip (6) zum Hinterlegen mindestens eines Zahlungsmittels (15) aufweist, wobei der NFC-Zahlchip (6) durch den mindestens einen Reed-Schalter (1) und den mindestens einen Magneten (2) aktivierbar ist, und wobei am Handschuh (13) eine App-Verbindungszone (4) angeordnet ist zum Verbinden des NFC-Zahlchips (6) mit einer App auf einem Gerät zum Programmieren oder Einrichten des mindestens einen Zahlungsmittels (15) auf dem NFC-Zahlchip (6) zur kontaktlosen Zahlungsabwicklung an einem NFC-Terminal.

2. Handschuh (13) nach Anspruch 1, **dadurch gekennzeichnet, dass** der NFC-Zahlchip (6) auf einem Finger (9) auf dem Handrücken (11) angeordnet ist.

3. Handschuh (13) nach einem der vorhergehenden Ansprüche, **dadurch gekennzeichnet, dass** der mindestens eine Magnet (2) auf dem Daumen (10) angeordnet ist.

4. Handschuh (13) nach einem der vorhergehenden Ansprüche, **dadurch gekennzeichnet, dass** der mindestens eine Reed-Schalter (1) auf mindestens einem Finger (9) auf der Handinnenseite (12) angeordnet ist zum Annähern an den mindestens einen Magneten (2).

5. Handschuh (13) nach einem der vorhergehenden Ansprüche, **dadurch gekennzeichnet, dass** der NFC-Zahlchip (6) und der mindestens eine Reed-Schalter (1) über Verbindungskabel (3) mit der App-Verbindungszone (4) verbunden sind.

6. Handschuh (13) nach einem der vorhergehenden Ansprüche, **dadurch gekennzeichnet, dass** die App-Verbindungszone (4) einen NFC-Tag oder einen QR-Code aufweist zum Verbinden mit einer App.

7. Handschuh (13) nach einem der vorhergehenden Ansprüche, **dadurch gekennzeichnet, dass** der Handschuh (13) mindestens zwei Reed-Schalter (1) und einen Mikrocontroller (7) aufweist, wobei der Mikrocontroller (7) mit den mindestens zwei Reed-Schalter (1) und dem NFC-Zahlchip (6) verbunden ist zum gezielten Zuordnen eines Reed-Schalters (1) mit einem Zahlungsmittel (15) auf dem NFC-Zahlchip (6) über die Annäherung des einen Reed-Schalters (1), welcher dem gewünschten Zahlungsmittel (15) zugeordnet ist, an den Magneten (2).

8. Handschuh (13) nach Anspruch 7, **dadurch gekennzeichnet, dass** auf der Mororradhandschuh (13) eine Energiequelle (8), vorzugsweise eine Batterie, zur Energieversorgung des Mikrocontrollers (7) aufweist.

9. Handschuh (13) nach einem der vorhergehenden Ansprüche, **dadurch gekennzeichnet, dass** der NFC-Zahlchip (6) ein SE-Element (14) zur sicheren Speicherung und Freigabe der Zahlungsmittel (15) aufweist.

10. Handschuh (13) nach Anspruch 9, **dadurch gekennzeichnet, dass** der NFC-Zahlchip (6) neben dem Zahlungsmittel (15) ein weiteres Token-basiertes System aufweist, beispielsweise einen Schlüssel zum kontaktlosen Öffnen eines Fahrzeugs.

11. Verwendung eines Handschuhs (13) nach einem der vorhergehenden Ansprüche, zum Bezahlen an einem NFC-Terminal mit dem durch den Magneten (2) und den Reed-Schalter (1) aktivierten Zahlungsmittel (15) auf dem NFC-Zahlchip (6) und durch Annähern des NFC-Zahlchips (6) an den NFC-Terminal.

12. Verfahren zur Programmierung eines NFC-Zahlchips (6) auf einem Handschuh (13) nach einem der Ansprüche 1 bis 10 und zur kontaktlosen Zahlungsabwicklung an einem NFC-Terminal, umfassend die Schritte:
a. Verbinden der App-Verbindungszone (4) mit einer App auf einem mobilen Gerät;
b. Zuordnung eines Zahlungsmittels (15) auf dem NFC-Zahlchip (6) zu einem Benutzerkonto auf der App;
c. Gegebenenfalls Zuordnung des Reed-Schalters (1) zu einem Zahlungsmittel (15);
d. Aktivierung des NFC-Zahlchips (6) auf dem Handschuh (13) durch Annäherung des mindestens einen Magneten (2) an einen Reed-Schalter (1);
e. Freigabe des im NFC-Zahlchip (6) gespeicherten Zahlungsmittels (15) durch Schliessen des Stromkreises im Reed-Schalter (1);
f. Halten des NFC-Zahlchips (6) an einen NFC-Terminal zum kontaktlosen Bezahlen über das freigeschaltete Zahlungsmittel (15).
